# EUROPÄISCHE PATENTSCHRIFT

(11) **EP 2 505 886 B1**
(45) Veröffentlichungstag und Bekanntmachung des Hinweises auf die Patenterteilung: **12.06.2013**
(21) Anmeldenummer: 11160797.4
(22) Anmeldetag: 01.04.2011
(51) Int. Cl.: F16K 24/04, F16K 33/00, F24D 19/08

(54) **Schnellentlüfter mit modifiziertem Schwimmer**
Quick ventilator with modified swimmer
Purge d'air rapide dotée d'un flotteur modifié

(43) Veröffentlichungstag der Anmeldung: 03.10.2012
(73) Patentinhaber: AFRISO-Euro-Index GmbH, 74363 Güglingen (DE)
(72) Erfinder: Frey, Marcus, 75031 Eppingen (DE)
(74) Vertreter: Kohler Schmid Möbus

(56) Entgegenhaltungen:
- CH-A- 176 845
- DE-A1- 2 243 287
- DE-A1- 2 349 989
- DE-U1-202006 005 199
- GB-A- 1 185 852

## Beschreibung

Die vorliegende Erfindung betrifft einen Schnellentlüfter gemäß Oberbegriff von Anspruch 1 sowie einen Schnellentlüfter gemäß Oberbegriff von Anspruch 5.

Ein derartiger Schnellentlüfter ist beispielsweise durch DE 20 2006 005 199 U1, DE 20 2006 005 200 U1, oder DE 20 2006 005 204 U1 1 bekannt geworden.

Solche Schnellentlüfter dienen zum automatischen Entlüften einer Heizungsanlage mittels eines schwimmerbetätigten Entlüftungsventils. In einer Kammer des Schnellentlüfters befindet sich ein Schwimmer, der, wenn in der Kammer eine Wassersäule steht, durch die Auftriebskraft nach oben gedrückt wird und dadurch das Entlüftungsventil schließt. Sobald Luft in die Kammer dringt, wird die Wassersäule nach unten verdrängt, und der Schwimmer senkt sich ab. Dadurch wird das Entlüftungsventil geöffnet, und die Luft entweicht aus der Kammer nach außen. Sobald wieder Wasser in die Kammer dringt, wird der Schwimmer angehoben und das Entlüftungsventil wieder geschlossen.

Bei den bekannten Schnellentlüftern wird der zylinderförmige Schwimmer über einen angespritzten Haken am Entlüftungsventil eingehängt. Dieser Haken ist aus Platzgründen am Schwimmer exzentrisch angebracht. Da der Haken exzentrisch positioniert, aber der Schwimmer im Grunde symmetrisch aufgebaut ist, neigt der Schwimmer zum Kippen. Dieses Kippmoment führt bei der Auf- und Abwärtsbewegung des Schwimmers an der Kammerwand zu Reibung, welche die allgemeine Entlüftungsdynamik des Schnellentlüfters verschlechtert.

Bei den bekannten Schnellentlüftern verläuft im Schwimmer ein Verbindungskanal mit einer nach unten offenen, zentralen Längsbohrung, die oben in eine horizontale Querbohrung des Schwimmers mündet. Somit kann eine aufsteigende Luftblase direkt im Zentrum des Schwimmers aufsteigen, bis sie über die Querbohrung nach außen in einen zwischen Gehäuse und Schwimmer vorhandenen Ringspalt umgeleitet wird. Je weiter oben dabei die Luftblase umgeleitet wird, desto kontinuierlicher ist die Entlüftung. Die Umleitung dient zur Bremsung der Luftblasen, damit kein Wasser mitgerissen wird und folglich die Spritzneigung des Schnellentlüfters minimiert wird. Da die aufsteigenden Luftblasen immer zu einer runden Form neigen, versuchen sie stets, sich an die runde Bohrungskontur der Längsbohrung anzupassen. Ist die Längsbohrung komplett von einer Luftblase benetzt und befindet sich Wasser in der Längsbohrung und oberhalb der Luftblase, kann es zu einer Art Pattsituation kommen. D.h., die Luftblase steht in der Längsbohrung und lässt das Wasser in der Längsbohrung nicht mehr passieren, was die allgemeine Entlüftungsdynamik des Schnellentlüfters verschlechtert.

Demgegenüber besteht die Aufgabe der vorliegenden Erfindung darin, bei einem Schnellentlüfter der jeweils eingangs genannten Art das Entlüftungsverhalten weiter zu verbessern.

Diese Aufgabe wird in einem ersten Aspekt erfindungsgemäß durch einen Schnellentlüfter mit den Merkmalen von Anspruch 1 gelöst.

Erfindungsgemäß ist die bisher runde Längsbohrung im Schwimmer durch eine polygone Bohrung, wie z.B. eine Rechteckbohrung, mit nach innen vorstehenden scharfkantigen oder abgerundeten Längskanten ersetzt. Dadurch können sich die aufsteigenden Luftblasen, die immer zu einer runden Form neigen, nicht oder nur schwierig komplett an die Bohrungskontur anpassen und bleiben folglich in der Längsbohrung nicht stecken.

Weitere Vorteile und vorteilhafte Ausgestaltungen des Gegenstands der Erfindung sind der Beschreibung, der Zeichnung und den Ansprüchen entnehmbar. Ebenso können die vorstehend genannten und die noch weiter aufgeführten Merkmale je für sich oder zu mehreren in beliebigen Kombinationen Verwendung finden. Die gezeigte und beschriebene Ausführungsform ist nicht als abschließende Aufzählung zu verstehen, sondern hat vielmehr beispielhaften Charakter für die Schilderung der Erfindung.

Es zeigen:
- Fig. 1: den erfindungsgemäßen Schnellentlüfter mit einem geöffnetem Entlüftungsventil im Längsschnitt, wobei der linke Halbschnitt einen Schwimmer in abgesenkter Position zeigt; und
- Fign. 2a-2d: den in Fig. 1 gezeigten Schwimmer in perspektivischer Ansicht (Fig. 2a), in einer Ansicht von unten (Fig. 2b) und in zwei unterschiedlichen Längsschnitten (Fign. 2c, 2d) entsprechend den Schnittlinien A-A und B-B in Fig. 2b.

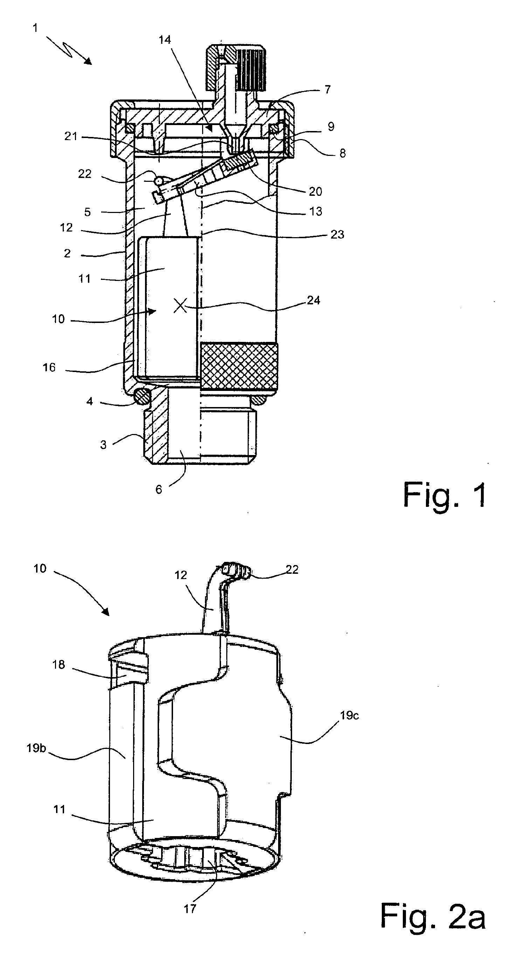

Der in **Fig. 1** gezeigte Schnellentlüfter **1** dient zur automatischen Entlüftung von Heizungssystemen und weist ein topfförmiges Gehäuse **2** aus Metall oder Kunststoff mit einem unteren Gewindestutzen **3** auf. Im Gehäuse 2 ist eine runde Kammer **4, 5** mit einer unteren Kammeröffnung **6** vorgesehen, die über den unteren Gewindestutzen 3 an ein Heizungssystem, wie z.B. ein Heizungsrohr, anschließbar ist. Die obere Öffnung des Gehäuses 2 ist mit einem Deckel **7** verschlossen, der mittels einer Überwurfmutter **8** unter Zwischenschaltung eines O-Rings **9** mit dem Gehäuse 2 verspannt ist.

Innerhalb der Kammer 4, 5 ist ein zylinderförmiger Schwimmer **10** vertikal verschiebbar geführt, durch den die Kammer in einen unteren Kammerraum 4 und einen oberen Kammerraum 5 geteilt ist. Der Schwimmer 10 ist durch einen im Wesentlichen zylinderförmigen Grundkörper **11** und einen daran exzentrisch angebrachten Haken (Aufhängeeinrichtung) **12** gebildet. Der Schwimmer 10 hängt mit dem Haken 12 an einem Ventilhebel **13** eines Entlüftungsventils **14**, der wiederum am Deckel 7 um eine horizontale Achse schwenkbar gelagert ist.

Wie in **Fign.2a bis 2d** gezeigt, verläuft im Grundkörper 11 ein Verbindungskanal **15**, der den unteren Kammerraum 4 mit einem Ringspalt **16** zwischen Gehäuse 2 und Schwimmer 10 verbindet. Der Verbindungskanal 15 ist T-förmig durch einen zum Boden des Grundkörpers 11 hin offenen, vertikalen Längskanalabschnitt **17** und durch zwei oben vom Längskanal 17 abgehende Querkanalabschnitte **18** gebildet, die jeweils möglichst nahe der Oberseite des Grundkörpers 11 in die Mantelfläche des Grundkörpers 11 münden. Der Schwimmer 10 weist mantelseitig vier Längsrippen **19a-19d** auf, wobei die beiden Querkanalabschnitte 18 seitlich in zwei einander gegenüberliegende Längsrippen 19 münden. Statt wie gezeigt T-förmig, kann der Verbindungskanal 15 aber auch andere Formen wie Y-Form, Stern-Form usw. aufweisen.

Befindet sich kein Wasser in der Kammer 4, 5, ist der Ventilhebel 13 durch den herabgesunkenen Schwimmer 10 nach unten verschwenkt. Dadurch gibt eine am Ventilhebel 14 befindliche Dichtung **20** eine Entlüftungsöffnung **21** des Entlüftungsventils 14 frei. Das Entlüftungsventil 14 ist offen, und Luft kann aus dem oberen Kammerraum 5 nach oben durch die Entlüftungsöffnung 21 nach außen entweichen. Befindet sich dagegen Wasser in der Kammer 4, 5, schwimmt der Schwimmer 10 auf und verschwenkt den Ventilhebel 13 nach oben, bis dieser mit seiner Dichtung 20 die Entlüftungsöffnung 21 verschließt. Das Entlüftungsventil 14 ist geschlossen, so dass kein Wasser durch das Langloch 23 nach oben austreten kann.

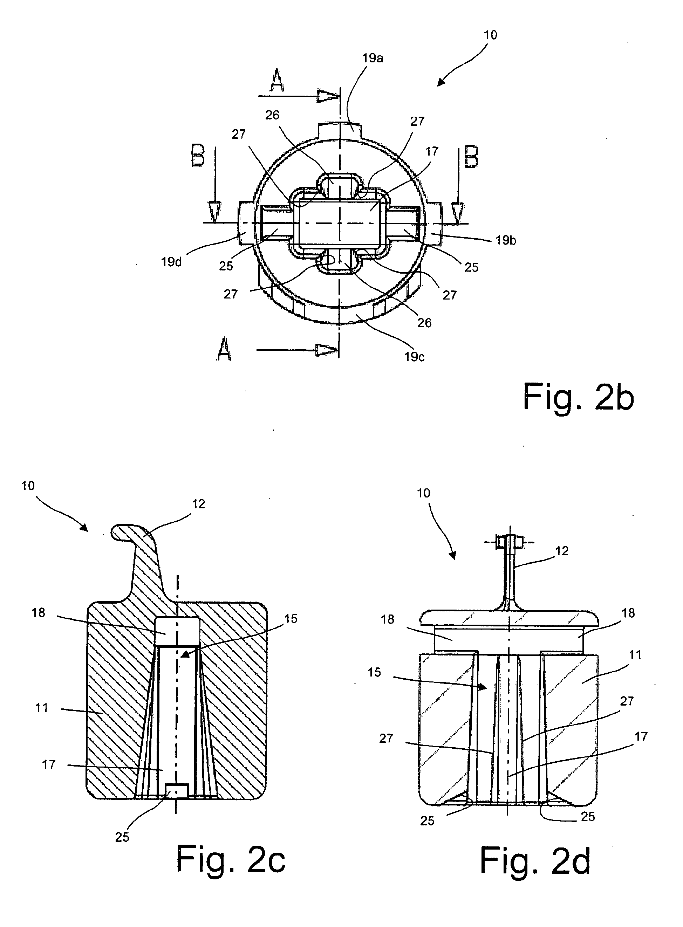

Damit auf den Schwimmer 10, der mit seinem Haken 12 in einem Aufhängepunkt **22** exzentrisch zur Längsmittelachse **23** der Kammer 4, 5 hängend an dem Ventilhebel 13 des Entlüftungsventils 14 gehalten ist, ein möglichst geringes Kippmoment wirkt und daher möglichst wenig Reibung an der Gehäusewand auftritt, ist der Schwerpunkt **24** des Grundkörpers 11 exzentrisch zur Längsmittelachse 23 in Richtung auf den Aufhängepunkt 22 angeordnet. Der Schwerpunkt 24 des Grundkörpers 11 kann beispielsweise von der Längsmittelachse 23 etwa gleich weit wie der Aufhängepunkt 22 beabstandet sein (d.h. kein Kippmoment) oder, wie in Fig. 1 gezeigt, auch nur etwa halb so weit wie der Aufhängepunkt 22 von der Längsmittelachse 23 beabstandet sein. Um den Schwerpunkt 24 des an sich symmetrischen Grundkörpers 11 aus der Symmetrieachse in Richtung Aufhängepunkt 22 zu verschieben, ist außen am Grundkörper 11 einseitig, nämlich nur auf der dem Aufhängepunkt 22 nächstliegenden Mantelhälfte, Material und damit Gewicht hinzugefügt. Wie in Fign. 2a und 2b gezeigt, erstreckt sich dazu beispielsweise die dem Aufhängepunkt 22 nächstliegende Längsrippe 19c über einen größeren Winkelbereich als die gegenüberliegende Längsrippe 19a. Alternativ oder zusätzlich kann der Grundkörper 11, der durch den Aufhängepunkt 22 in die in Fig. 1 kleinere linke Hälfte und die größere rechte Hälfte aufgeteilt ist, in seiner kleineren Hälfte eine höhere Dichte bzw. ein höheres Gewicht als in der anderen Hälfte aufweisen, um so den Schwerpunkt 24 in Richtung Aufhängepunkt 22 zu verschieben und das Kippmoment zu reduzieren.

Wie in Fig. 2 weiter gezeigt, ist der Längskanalabschnitt 17 als Rechteckbohrung mit einem lichten rechteckigen Bohrungsquerschnitt ausgebildet. Das untere Bohrungsende weist an seinen beiden kürzeren Rechteckseiten zwei flache Einführschrägen **25**, welche sich nicht über die gesamte Bohrungslänge erstrecken, und an seinen beiden längeren Rechteckseiten zwei nach außen zurückversetzte steile Einführschrägen **26** auf, welche sich über die gesamte Bohrungslänge erstrecken. Durch die zurückversetzten steilen Einführschrägen 26 sind an den beiden längeren Rechteckseiten jeweils zwei scharfkantige oder abgerundete Längskanten **27** ausgebildet. Ausgehend vom unteren Bohrungsende verjüngt sich der Bohrungsquerschnitt nach oben auf einen recheckigen Bohrungsquerschnitt. Durch den polygonen Bohrungsquerschnitt mit seinen vier nach innen gerichteten Längskanten 27 können sich die im Längskanalabschnitt 17 aufsteigenden Luftblasen, die immer zu einer runden Form neigen, nicht oder nur schwierig komplett an die Bohrungskontur anpassen und bleiben daran nicht haften. Die aufsteigenden Luftblasen bleiben folglich nicht im Längskanalabschnitt 17 stecken, wodurch das Entlüftungsverhalten des Schnellentlüfters 1 weiter verbessert ist.

Alternativ oder zusätzlich kann für eine exzentrische Anordnung des Schwerpunkts 24 der Verbindungskanal 15, also insbesondere der Längskanalabschnitt 17, vollständig bzw. größtenteils in derjenigen der beiden durch die Längsmittelachse 23 aufgeteilten Längshälften des Grundkörpers 11 verlaufen, die den Aufhängepunkt 22 nicht aufweist, also in Fig. 1 in der rechten Längshälfte des Grundkörpers 11. Dabei kann der Längskanalabschnitt 17 beispielsweise parallel oder schräg zur Längsmittelachse 23 verlaufen.

## Patentansprüche

1. Schnellentlüfter (1) zum Entlüften von Heizungssystemen, umfassend:
ein Gehäuse (2) mit einer Kammer (4, 5), die über eine untere Kammeröffnung (6) an ein Heizungssystem anschließbar ist,
ein schwimmerbetätigtes Entlüftungsventil (14) zum Entlüften der Kammer (4, 5), und
einen in der Kammer (4, 5) vertikal verschiebbar geführten Schwimmer (10),
der hängend an dem Entlüftungsventil (14) gehalten ist und einen Verbindungskanal (15) mit einem nach unten offenen, vertikalen Längskanalabschnitt (17) aufweist,
**dadurch gekennzeichnet,**
**dass** der Längskanalabschnitt (17) als Längsbohrung mit einem polygonen Bohrungsquerschnitt mit nach innen vorstehenden Längskanten (27) ausgebildet ist.

2. Schnellentlüfter nach Anspruch 1, **dadurch gekennzeichnet, dass** sich der Längskanalabschnitt (17) nach oben hin verjüngt.

3. Schnellentlüfter nach Anspruch 1 oder 2, **dadurch gekennzeichnet, dass** die nach innen vorstehenden Längskanten (27) durch mindestens eine gegenüber einer Seite des Längskanalabschnitts (17) nach außen zurückversetzte Einführschräge (26) gebildet ist..

4. Schnellentlüfter nach Anspruch 3, **dadurch gekennzeichnet, dass** an mindestens zwei einander gegenüberliegenden Seiten des Längskanalabschnitts (17) jeweils eine nach außen zurückversetzte Einführschräge (26) vorgesehen ist.

5. Schnellentlüfter einem der vorhergehenden Ansprüche, **dadurch gekennzeichnet, dass** der Längskanalabschnitt (17) einen lichten rechteckigen Querschnitt aufweist.

6. Schnellentlüfter nach Anspruch 5, **dadurch gekennzeichnet, dass** die beiden längeren Seiten des rechteckigen Querschnitts parallel zur Schwenkachse eines Ventilhebels (13) des Entlüftungsventil (14), an dem der Schwimmer (10) hängend gehalten ist, verlaufen.

7. Schnellentlüfter nach einem der vorhergehenden Ansprüche, **dadurch gekennzeichnet, dass** der Verbindungskanal (15) mindestens einen Querkanalabschnitt (18) aufweist, der oben von dem Längskanalabschnitt (17) abgeht und in einen zwischen Gehäuse (2) und Schwimmer (10) vorhandenen Ringspalt (16) der Kammer (4, 5) mündet.

8. Schnellentlüfter nach einem der vorhergehenden Ansprüche, **dadurch gekennzeichnet, dass** der Schwimmer (10) einen Grundkörper (11) und eine exzentrisch am Grundkörper (11) vorgesehene Aufhängeeinrichtung (12) aufweist, mit welcher der Schwimmer (10) in einem Aufhängepunkt (22) exzentrisch zur Längsmittelachse (23) der Kammer (4, 5) hängend an dem Entlüftungsventil (14) gehalten ist, wobei der Schwerpunkt (24) des Grundkörpers (11) exzentrisch zur Längsmittelachse (23) der Kammer (4, 5) in Richtung auf den Aufhängepunkt (22) der Aufhängeeinrichtung (12) angeordnet ist.

9. Schnellentlüfter nach Anspruch 8, **dadurch gekennzeichnet, dass** der Schwerpunkt (24) möglichst nahe an der durch den Aufhängepunkt (22) gehenden vertikalen Aufhängeachse des Grundkörpers (11) angeordnet ist.

10. Schnellentlüfter nach Anspruch 8 oder 9, **dadurch gekennzeichnet, dass** der Schwerpunkt (24) des Grundkörpers (11) von der Längsmittelachse (23) mindestens halb so weit wie der Aufhängepunkt (22) von der Längsmittelachse (23) beabstandet ist.

11. Schnellentlüfter nach einem der Ansprüche 8 bis 10, **dadurch gekennzeichnet, dass** der Schwerpunkt (24) des Grundkörpers (11) von der Längsmittelachse (23) etwa gleich weit wie der Aufhängepunkt (22) beabstandet ist.

12. Schnellentlüfter nach einem der Ansprüche 8 bis 11, **dadurch gekennzeichnet, dass** der Grundkörper (11) an seiner Mantelfläche Längsrippen (19a-19d) aufweist, wobei für eine exzentrische Anordnung des Schwerpunkts (24) sich die dem Aufhängepunkt (22) nächstliegende Längsrippe (19c) über einen größeren Winkelbereich erstreckt als die gegenüberliegende Längsrippe (19a).

13. Schnellentlüfter nach einem der der Ansprüche 8 bis 12, **dadurch gekennzeichnet, dass** für eine exzentrische Anordnung des Schwerpunkts (24) ein im Grundkörper (11) verlaufender Verbindungskanal 15) zumindest größtenteils in derjenigen der beiden durch die Längsmittelachse (23) aufgeteilten Längshälften des Grundkörpers (11) verläuft, die den Aufhängepunkt (22) nicht aufweist.

14. Schnellentlüfter nach einem der Ansprüche 8 bis 13, **dadurch gekennzeichnet, dass** für eine exzentrische Anordnung des Schwerpunkts (24) der bezüglich des exzentrisch angeordneten Aufhängepunkts (22) in eine kleinere und eine größere Hälfte unterteilte Grundkörper (11) in der kleineren Hälfte eine höhere Dichte bzw. ein höheres Gewicht als in der größeren Hälfte aufweist.

## Claims

1. Quick de-aerator (1) for venting heating systems, comprising:
a housing (2) having a chamber (4, 5) which can be connected to a heating system via a lower chamber opening (6),
a float-operated vent valve (14) for venting the chamber (4, 5), and
a float (10) which is guided in the chamber (4, 5) in such a manner that it can be vertically displaced, is held suspended on the vent valve (14), and
comprises a connecting channel (15) having a downwardly open, vertical longitudinal channel section (17),
**characterized in that**
the longitudinal channel section (17) is formed as a longitudinal borehole with a polygonal borehole cross-section and inwardly projecting longitudinal edges (27).

2. Quick de-aerator according to claim 1, **characterized in that** the longitudinal channel section (17) tapers in an upward direction.

3. Quick de-aerator according to claim 1 or 2, **characterized in that** the inwardly projecting longitudinal edges (27) are formed by at least one insertion bevel (26) which is outwardly recessed with respect to a side of the longitudinal channel section (17).

4. Quick de-aerator according to claim 3, **characterized in that** one outwardly recessed insertion bevel (26) each is provided on at least two opposite sides of the longitudinal channel section (17).

5. Quick de-aerator according to any one of the preceding claims, **characterized in that** the longitudinal channel section (17) has a clear rectangular cross-section.

6. Quick de-aerator according to claim 5, **characterized in that** the two longer sides of the rectangular cross-section extend parallel to the pivot axis of a valve lever (13) of the vent valve (14), on which valve lever the float (10) is held suspended.

7. Quick de-aerator according to any one of the preceding claims, **characterized in that** the connecting channel (15) has at least one transverse channel section (18), which branches off the longitudinal channel section (17) at the top and opens into an annular gap (16) of the chamber (4, 5) between the housing (2) and the float (10).

8. Quick de-aerator according to any one of the preceding claims, **characterized in that** the float (10) has a base body (11) and a suspension device (12) which is eccentrically provided on the base body (11) and holds the float (10) suspended on the vent valve (14) in a point of suspension (22) eccentrically with respect to the longitudinal center axis (23) of the chamber (4, 5), wherein the center of gravity (24) of the base body (11) is arranged eccentrically with respect to the longitudinal center axis (23) of the chamber (4, 5) in a direction towards the point of suspension (22) of the suspension device (12).

9. Quick de-aerator according to claim 8, **characterized in that** the center of gravity (24) is arranged as close as possible to the vertical axis of suspension of the base body (11), which axis extends through the point of suspension (22).

10. Quick de-aerator according to claim 8 or 9, **characterized in that** the distance between the center of gravity (24) of the base body (11) and the longitudinal center axis (23) is at least half the distance between the point of suspension (22) and the longitudinal center axis (23).

11. Quick de-aerator according to one of the claims 8 through 10, **characterized in that** the distance between the center of gravity (24) of the base body (11) and the longitudinal center axis (23) is approximately the same as the distance between the point of suspension (22) and the longitudinal center axis (23).

12. Quick de-aerator according to any one of the claims 8 through 11, **characterized in that** the base body (11) has longitudinal ribs (19a-19d) on its lateral surface, wherein for eccentrically arranging the center of gravity (24), the longitudinal rib (19c) which is nearest to the point of suspension (22) extends over a larger angular area than the opposite longitudinal rib (19a).

13. Quick de-aerator according to any one of the claims 8 through 12, **characterized in that** for eccentrically arranging the center of gravity (24), a connecting channel (15), which extends in the base body (11), extends at least to a major part **in that** longitudinal half of the two longitudinal halves of the base body (11) divided by the longitudinal center axis (23), which does not comprise the point of suspension (22).

14. Quick de-aerator according to any one of the claims 8 through 13, **characterized in that** for eccentrically arranging the center of gravity (24), the smaller half of the base body (11), which is subdivided into a smaller and a larger half with respect to the eccentrically arranged point of suspension (22), has a higher density or a higher weight than the larger half.

## Revendications

1. Purgeur rapide (1) pour purger des systèmes de chauffage, comprenant :
un boîtier (2) avec une chambre (4, 5) qui peut être raccordée à un système de chauffage par l'intermédiaire d'une ouverture inférieure de chambre (6),
une soupape de purge (14), actionnée par flotteur, pour purger la chambre (4, 5), et
un flotteur (10) guidé en déplacement vertical dans la chambre (4, 5), qui est fixé en suspension à la soupape de purge (14) et qui présente un canal de liaison (15) avec un tronçon de canal longitudinal (17) vertical, ouvert vers le bas,
**caractérisé en ce que** le tronçon de canal longitudinal (17) est réalisé sous la forme d'un perçage longitudinal avec une section de perçage polygonale dotée d'arêtes longitudinales (27) dépassant vers l'intérieur.

2. Purgeur rapide selon la revendication 1, **caractérisé en ce que** le tronçon de canal longitudinal (17) se rétrécit vers le haut.

3. Purgeur rapide selon la revendication 1 ou 2, **caractérisé en ce que** les arêtes longitudinales (27) dépassant vers l'intérieur sont formées par au moins un biais d'introduction (26) en retrait vers l'extérieur par rapport à un côté du tronçon de canal longitudinal (17).

4. Purgeur rapide selon la revendication 3, **caractérisé en ce qu'**un biais d'introduction respectif (26) en retrait vers l'extérieur est prévu sur au moins deux côtés mutuellement opposés du tronçon de canal longitudinal (17).

5. Purgeur rapide selon l'une des revendications précédentes, **caractérisé en ce que** le tronçon de canal longitudinal (17) présente une section intérieure rectangulaire.

6. Purgeur rapide selon la revendication 5, **caractérisé en ce que** les deux grands côtés de la section rectangulaire s'étendent parallèlement à l'axe de pivotement d'un levier de soupape (13) de la soupape de purge (14) auquel le flotteur (10) est fixé en suspension.

7. Purgeur rapide selon l'une des revendications précédentes, **caractérisé en ce que** le canal de liaison (15) présente au moins un tronçon de canal transversal (18), qui part en haut du tronçon de canal longitudinal (17) et débouche dans un passage annulaire (16) de la chambre (4, 5) qui est présent entre le boîtier (2) et le flotteur (10).

8. Purgeur rapide selon l'une des revendications précédentes, **caractérisé en ce que** le flotteur (10) présente un corps de base (11) et un dispositif de suspension (12), prévu excentriquement sur le corps de base (11) et par lequel le flotteur (10) est fixé en suspension à la soupape de purge (14), en un point de suspension (22), excentriquement par rapport à l'axe médian longitudinal (23) de la chambre (4, 5), sachant que le centre de gravité (24) du corps de base (11) est disposé excentriquement par rapport à l'axe médian longitudinal (23) de la chambre (4, 5) en direction du point de suspension (22) du dispositif de suspension (12).

9. Purgeur rapide selon la revendication 8, **caractérisé en ce que** le centre de gravité (24) est disposé le plus près possible de l'axe de suspension vertical, passant par le point de suspension (22), du corps de base (11).

10. Purgeur rapide selon la revendication 8 ou 9, **caractérisé en ce que** la distance entre le centre de gravité (24) du corps de base (11) et l'axe médian longitudinal (23) est égale au moins à la moitié de la distance entre le point de suspension (22) et l'axe médian longitudinal (23).

11. Purgeur rapide selon l'une des revendications 8 à 10, **caractérisé en ce que** la distance entre le centre de gravité (24) du corps de base (11) et l'axe médian longitudinal (23) est approximativement égale à la distance entre le point de suspension (22) et l'axe médian longitudinal (23).

12. Purgeur rapide selon l'une des revendications 8 à 11, **caractérisé en ce que** le corps de base (11) présente des nervures longitudinales (19a-19d) sur sa surface extérieure, sachant qu'en vue d'une disposition excentrique du centre de gravité (24), la nervure longitudinale (19c) la plus proche du point de suspension (22) s'étend sur une plus grande plage angulaire que la nervure longitudinale opposée (19a).

13. Purgeur rapide selon l'une des revendications 8 à 12, **caractérisé en ce que**, en vue d'une disposition excentrique du centre de gravité (24), un canal de liaison (15) s'étendant dans le corps de base (11) s'étend au moins en majeure partie dans celle des deux moitiés longitudinales du corps de base (11), séparées par l'axe médian longitudinal (23), qui ne présente pas le point de suspension (22).

14. Purgeur rapide selon l'une des revendications 8 à 13, **caractérisé en ce que**, en vue d'une disposition excentrique du centre de gravité (24), le corps de base (11), divisé par rapport au point de suspension (22) excentriquement disposé en une moitié plus petite et une moitié plus grande, présente dans la moitié plus petite une plus grande densité ou encore un plus grand poids que dans la moitié plus grande.
